# EUROPEAN PATENT APPLICATION

(11) **EP 2 083 558 A1**
(43) Date of publication of application: **29.07.2009**
(21) Application number: 09151341.6
(22) Date of filing: 26.01.2009
(51) Int. Cl.: H04M 1/60, H04R 5/033

(54) **Mobile phone, method of switching a mobile phone and use of a mobile phone**

(30) Priority: 25.01.2008 WO PCT/NL2008/050045
(71) Applicant: SiTel Semiconductor B.V., 5215 MV 's-Hertogenbosch (NL)
(72) Inventor: Kruiskamp, Marinus Wilhelmus, 5237 CB 's-Hertogenbosch (NL)
(74) Representative: Ketelaars, Maarten F.J.M.

(57) **Abstract**

The invention relates to a wireless or cordless phone, such as cell phone or mobile phone. The phone comprises at least two loudspeakers (5, 15). The loudspeakers (5, 15) are arranged to function in a handsfree mode and handheld mode respectively. According to the invention at least one of the loudspeakers functions (15) as a microphone in addition to or as a replacement for a dedicated microphone. The loudspeakers (5, 15) arc connected to sound input (25) and sound output units (24, 26) through a switching array (20) for arranging the suitable connections according to the different functioning modes.

## Description

This invention relates to communications units such as mobile phones having at least two loudspeakers for outputting sound signals. The invention also relates to a method of switching a mobile phone in general and in particular from a first to a second mode. The invention further relates to the use of a mobile phone.

### BACKGROUND OF THE INVENTION

A typical handset of a wireless (mobile) or cordless (DECT) phone has two loudspeakers located in its housing. The invention as will be explained below deals with all types of wireless or cordless telephones. For the sake of simplicity, they will all be referred to as "mobile phone". One of the two loudspeakers, a so called earpiece speaker, is located in the housing near an earpiece that is arranged to be positioned close to the ear of the user when the phone is in a normal, hand-held position. The loudspeaker is positioned close to one end of the phone, while a microphone can be positioned close to another end of the phone. The distance between the two positions covers at least part of the human ear-mouth length.

The mobile phone can be of a foldable, pivotable, extendible or any other suitable type. In the handheld mode, the earpiece is held against an ear of a user during a telephone conversation. This loudspeaker has the capability of creating sound levels audible at a small distance.

In most cases, another loudspeaker is located inside the housing of the mobile phone and is arranged for outputting ring tones. In an embodiment the other loudspeaker can be used in a hands-free operation.

One of the reasons why these loudspeaker functions are not performed by a single loudspeaker is that a ring tone is a loud tone. This loud tone could result in damaging the human ear if produced close to the ear. On the other hand the hand-held audio signal is too weak when produced by a loudspeaker which is not close to the ear.

A typical handset also has at least one microphone which is used during a phone call. It is possible to use the microphone in both the hands-free and hand-held mode.

It is a continuous industrial effort to reduce the amount of parts on a mobile phone and/or to reduce the costs for manufacturing such phones. It is a further goal to improve the sound qualities of such mobile phones.

US2005/0136848 discloses a mobile phone with two microphones, of which one microphone is operable as a loudspeaker. The two microphones are provided to allow performing echo cancellation on the received sound energy. EP185550 discloses a mobile phone with two loudspeakers, of which (at least) one can be switched between being operated as a microphone or a loudspeaker. The two loudspeakers are part of peripheral equipment and are a detachably mounted in the terminal body.

### SUMMARY OF THE INVENTION

The present invention allows to further reduce the costs of manufacturing mobile phones by using an already present part of the phone for an additional purpose and/or to reduce the amount of parts used in a mobile phone. Switching according to the invention allows the replacement of a major hardware part of mobile phones according to the prior art. According to a further aspect the invention also avoids the use of a dedicated microphone in a handset.

### GENERAL DESCRIPTION OF THIS INVENTION

At least one of the goals is obtained by providing a mobile phone comprising a housing having at least two loudspeakers for outputting sound signals, the mobile phone being switchable between at least a first mode and a second mode, wherein the first loudspeaker is operable to output sound signals in the first mode and the second loudspeaker is operable to output sound signals in the second mode. These different modes can be known modes such as the normal hand-held mode and the handsfree mode. According to an aspect of the invention the second loudspeaker is operable as a microphone in the first mode. The second loudspeaker according to the invention functions in a first mode as loudspeaker and in a second mode as a microphone. At least in the second mode according to the invention a separate microphone may thus avoided. Costs can be reduced. The second loudspeaker can be connected to a sound output unit in the second mode and can be connected to a sound input unit in the first mode. This allows the same hardware piece to function differently in the two modes of the mobile phone. The skilled person is aware of the fact that it is possible to have a dynamic loudspeaker functioning as a microphone. However, the inventor of the present invention is not aware of this principle ever being used in a mobile phone.

In an embodiment the loudspeakers are received in the body of the mobile phone. The housing can form an encasing of the loudspeakers. The loudspeakers are rigidly received in the housing. The loudspeakers are not detachable from the housing. The loudspeakers can be fixed in the housing.

In an embodiment the first loudspeaker is located near a first end of the housing, forming a mouth piece. In an embodiment the second loudspeaker is positioned near another end of the housing, which is arranged as an earpiece of the mobile phone. A user will recognize the ends of the mobile phone and will use the mobile phone in accordance with is functionalities, putting the earpiece close to his ears. The user is familiar with the upper part of the mobile phone functioning as the earpiece.

In an embodiment the first mode is a handsfree mode. During a handsfree phone call, the earpiece loudspeaker is used as a microphone. This will prevent hearing damage to the ear of the user, since second speaker outputs sound compatible with the handheld mode, which are at a relatively low sound level and is not used for emitting sounds in the louder handsfree mode. According to the invention the earpiece loudspeaker/microphone has a double functionality.

In another embodiment the double functionality is provided by the first loudspeaker functioning as the loudspeaker in the first, handsfree, mode, while functioning as a microphone in the second handheld mode. The first loudspeaker/microphone is positioned near the mouthpiece of the mobile phone. A user is not inclined to put the mouthpiece close to the ear, and therefore louder tones can be emitted from the mouthpiece loudspeaker.

In an embodiment a second mode is a normal-handheld. During a handheld phone call, the handsfree loudspeaker can be used as a microphone. The first or handsfree loudspeaker can be located near a mouth piece of the mobile phone or at the back side of the mobile phone. This will prevent hearing damage to the ear of the user, since the user will not be inclined to put the mouth piece close to the ear.

According to an embodiment, the two loudspeakers are arranged for outputting different levels of sound. The first loudspeaker is preferably the louder speaker, thus providing a sufficient sound level for a handsfree use where the mobile phone is at a relatively large distance from the ear.

In an embodiment the electric power of the loudspeaker in the handheld mode is less than 0,1 W, preferably less than 0.05 W. A user can hold his ear in close proximity of such a loudspeaker. In an embodiment the earpiece loudspeaker has an output level in the order of 17-45dB when measured at a 1 meter distance from the source. In an embodiment the earpiece loudspeaker located in the house emits at most 95 dB preferably less than 85 dB in order to prevent damage to the ear when the earpiece loudspeaker is held in close proximity of the ear.

In an embodiment the electric power of the loudspeaker in the handfree mode is more than 0.1 W, preferably more than 0.2 W. Since this loud sound source is located in the mouth piece, the user is not inclined to put it in close proximity of his/her ear. In an embodiment the handfree loudspeaker has an output level in the order of 35-65dB when measured at a 1 meter distance from the source. In the handsfree mode, the loudspeaker emits sound levels of more than 100dB if measured in direct proximity of the source. This could cause permanent damage to the ear.

According to the invention the second loudspeaker can function as an additional second microphone next to the prior art microphone. This can allow for example stereo recording with the mobile phone.

According to the invention one and the same loudspeaker/microphone has a double functionality.

It is preferred to have a mobile phone that comprises a radio transceiver connected to a processor, the housing providing input means for selecting a mode, the input means being connected to the processor, the processor arranged to switch modes and to connect the second loudspeaker to a sound output unit in the second mode and to a sound input unit in the first mode. This allows the user to switch between the two modes. The processor registers the user's choice and switches between the modes according to the input. The processor can configure switches connecting the second loudspeaker to the sound input unit and to the sound output unit. The switching can occur automatically, not initiated by a user's choice for example when there is an incoming call.

According to a further embodiment the first loudspeaker functions as a microphone in the second mode. The first loudspeaker can be connected to a sound input unit in the first mode and can be connected to a sound output unit in the second mode. The two loudspeakers function exchangeable. The loudspeakers are preferably connected to sound input and output units through switches, wherein the switches are exclusive switches. The loudspeakers are disconnected from the sound output units when the loudspeakers function as microphones.

According to a preferred embodiment the sound input and sound output units comprise a codec. In an embodiment the mobile phone comprises a single codec for the microphone and loudspeakers.

According to yet a further embodiment the first loudspeaker is arranged for sounding a ring tone.

According to another aspect of the invention a method of switching a mobile phone is provided. The mobile phone comprises a loudspeaker. The mobile phone according the invention operates in a first mode having said loudspeaker functioning as an output for sound signals. The method comprises switching the mobile phone from the first mode to a second mode wherein the loudspeaker functions as a microphone. This allows the double use of a single piece of hardware. The first mode is preferably the handsfree mode for operation of the mobile phone. The second mode is preferably the handheld mode for operation of the mobile phone. In an embodiment, the user can initiate the switching between the first mode and the second mode.

The invention further relates to the use of a loudspeaker in a mobile phone, wherein the loudspeaker is operable as a sound outputting device in a first mode of the mobile phone and wherein the loudspeaker is operable as a microphone in a second mode of the mobile phone. Preferably, the second mode is a handheld mode.

Although the invention is described having different preferred features, it will be clear that the skilled person can combine features from available prior art mobile phones with the mobile phone according to the invention.

### GENERAL DESCRIPTION OF THE DRAWINGS

The invention will be described with reference to the drawings which are only intended to illustrate the invention but not to limit its scope which is only limited by the annexed claims and their technical equivalents. In the drawings:
Figure 1 is a block diagram of a prior art mobile phone,
Figure 2 is a detail of the block diagram according to figure 1 for a mobile phone according to a preferred embodiment of the invention;
Figure 3 schematically shows a front view of a mobile phone according to the invention.

### DETAILLED DESCRIPTION OF THE DRAWINGS

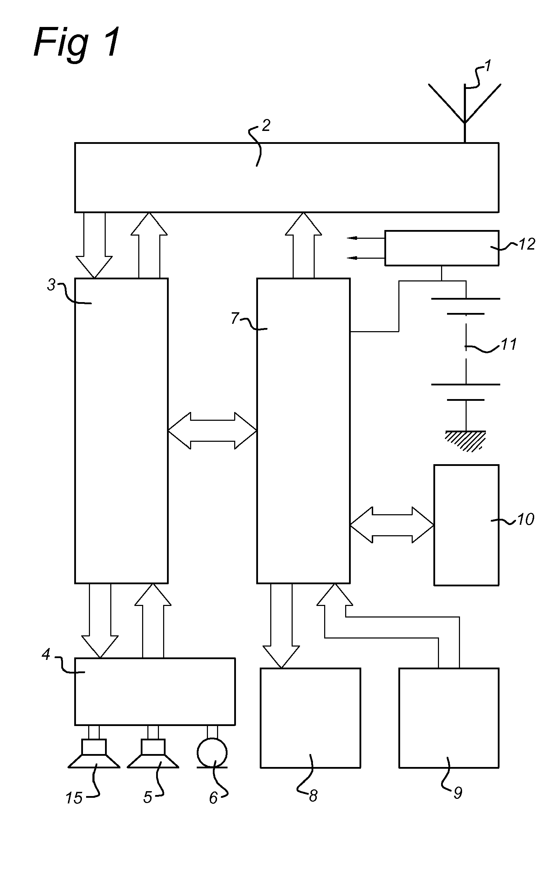

Referring to Figure 1, a mobile telephone comprises an antenna 1, a radio transceiver or line interface 2, a baseband DSP (digital signal processing) subsystem 3, an analogue audio subsystem 4, two loudspeakers 5 and 15, a microphone 6, a controller 7, a liquid crystal display 8, a keypad 9, memory 10, a battery 11 and a power supply circuit 12.

The radio transceiver 2 contains IF and RF circuits of the mobile telephone's transmitter and receiver and a frequency synthesizer for tuning the mobile telephone's transmitter and receiver. The antenna 1 is coupled to the RF subsystem 2 for the reception and transmission of radio waves.

The baseband DSP subsystem 3 is coupled to the RF subsystem 2 to receive baseband signals therefrom and for sending baseband modulation signals thereto. The baseband DSP subsystem 3 includes codec functions which are well-known in the art.

Subsystem 3 can comprise a processor for carrying out arithmetic operations. The processor can be connected to a plurality of memory components, e.g. containing the codec.

The analogue audio subsystem 4 is coupled to the baseband DSP subsystem 3 and receives demodulated audio therefrom. The analogue audio subsystem 4 amplifies the demodulated audio and applies it to either loudspeaker 5 or loudspeaker 15. Acoustic signals, detected by the microphone 6, are pre-amplified by a pre-amplifier 27 and then sent to the analogue audio subsystem 4. Then, acoustic signals are sent to the baseband DSP subsystem 3 for coding. The analogue audio subsystem 4 comprises both the input and output sound units.

The controller 7 controls the operation of the mobile telephone. It is coupled to the radio transceiver 2 for supplying tuning instructions to the frequency synthesizer and to the baseband DSP subsystem for supplying control data and management data for transmission. The controller 7 operates according to a program stored in the memory 10. The memory 10 is shown separately from the controller 7. However, it may be integrated with the controller 7. A timer for triggering interrupts is also provided by the controller 7.

The display device 8 is connected to the controller 7 for receiving control data and the keypad 9 is connected to the controller 7 for supplying user input data signals thereto.

The user can input instructions using one or more input devices, such as the key pad, but possibly also a touch screen, voice converter etc. The subsystem 3 could be connected to an additional communication network, such as a public switched telephone network or the internet by means of an I/O device.

The battery 11 is connected to the power supply circuit 12 which provides regulated power at various voltages used by the components of the mobile telephone. The positive terminal of the battery 11 is connected to an analogue-to-digital converter (ADC) input of the controller 7.

In a first mode, the handsfree mode, sounds will be emitted from loudspeaker 5. In a second mode, the handheld mode, loudspeaker 15 is functioning as sound emitter. The user is able to switch between the two modes, also switching between the two loudspeakers 5, 15 by operating one or more keys on the keypad 9 and, thus, sending suitable control signals to the controller 7.

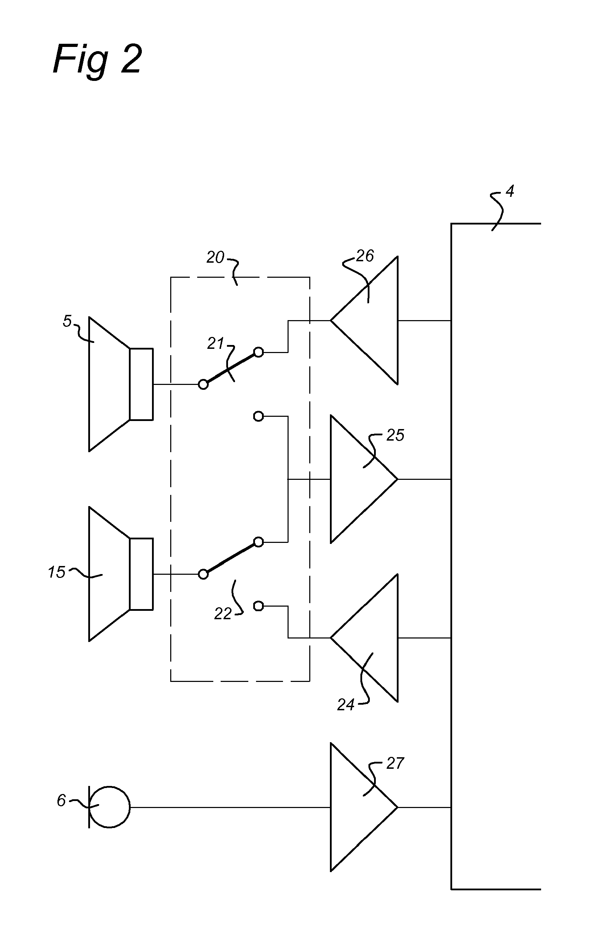

Figure 2 shows a block diagram of an embodiment according to the invention. Again two loudspeakers 5, 15 are present. More loudspeakers could be available. Figure 2 also shows schematically a switch array 20 (dotted line) that is connected to and controlled by controller 7 (connections between controller 7 and switch array 20 are present for that purpose but not expressly shown). The switch array 20 comprises two switches 21 and 22. Switch array 20 enables the connections to the analogue audio subsystem 4 according to the invention through respective amplifiers 24, 25, 26. The microphone 6 is coupled to audio subsystem 4 via pre-amplifier 27. It is observed that microphone 6 and pre-amplifier 27 are optional and in a preferred embodiment they are not present at all. Clearly this will save costs.

In the first, handsfree mode, loudspeaker 5 is functioning as sound emitting source, while loudspeaker 15 is functioning as microphone. So, controller 7 is arranged, upon receiving suitable control signals from the keypad as operated by a user, to control switch 21 such that, in the first mode, loudspeaker 5 is connected to an output of the audio subsystem 4 and to control switch 22 such that loudspeaker 15 is connected to an input of the analogue audio subsystem 4.

On the other hand, in the second, handheld mode, loudspeaker 15 is functioning as sound emitting source, while loudspeaker 5 is functioning as microphone. So, controller 7 is arranged, upon receiving suitable control signals from the keypad as operated by a user, to control switch 22 such that, in the second mode, loudspeaker 15 is connected to an output of the audio subsystem 4 and to control switch 21 such that loudspeaker 5 is connected to an input of the analogue audio subsystem 4.

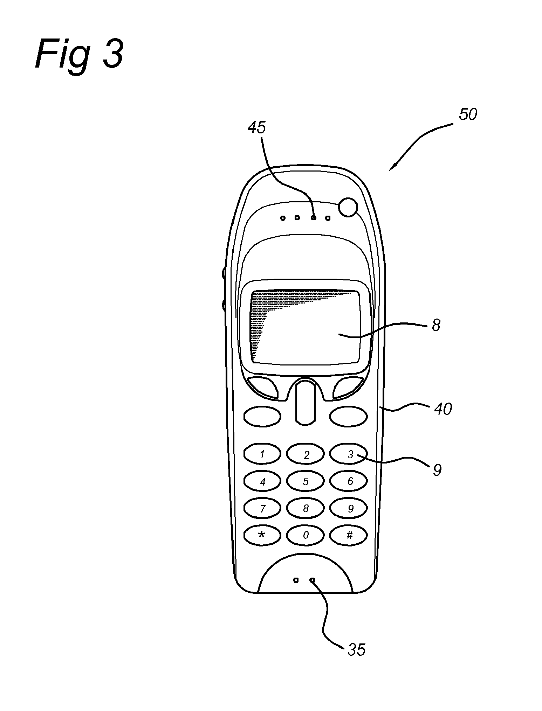

Figure 3 schematically shows a front view of a mobile phone 50 according to an embodiment of the invention. Similar to the mobile phone shown in Figure 1, the mobile phone 50 comprises an antenna 1, a radio transceiver or line interface 2, a baseband DSP (digital signal processing) subsystem 3, an analogue audio subsystem 4, two loudspeakers 5 and 15, a microphone 6, a controller 7, a liquid crystal display 8, a keypad 9, memory 10, a battery 11 and a power supply circuit 12. The liquid crystal display 8 and the keypad 9 are visible from the front side of the mobile phone 50, and are drawn in Figure 3. The other components are inside the mobile phone, and thus not shown in Figure 3. Figure 3 further shows a housing 40 of the mobile phone 50, having a mouth piece 35 and an ear piece 45.

Loudspeaker 15 can be positioned in the housing 40 near an earpiece 45 of the mobile phone. Loudspeaker 5 can be located in the housing 40 near a mouth piece 35 of the mobile phone or at the back of the mobile phone. In an embodiment, the mobile phone according to the invention lacks a dedicated microphone, but uses at least one loudspeaker also as a microphone. If microphone 6 is present, it will be possible to have the mobile phone functioning as a stereo recording device, since two microphones can be used simultaneously.

It will be clear to the skilled reader that many embodiments are feasible within the scope of the invention and the applicant intends to cover all these embodiments and equivalent forms thereof under the scope of protection of the claims.

## Claims

1. Mobile phone (50) comprising a housing (40) having at least two loudspeakers (5, 15) for outputting sound signals, the mobile phone (50) being switchable between at least a first mode and a second mode, wherein the first loudspeaker (5) is operable to output sound signals in the first mode and the second loudspeaker (15) is operable to output sound signals in the second mode, wherein the second loudspeaker is operable as a microphone in the first mode, wherein the second mode is a handheld mode, and wherein the second loudspeaker (15) is located in the housing (40), close to an earpiece (45) formed in the housing (40).

2. Mobile phone according to claim 1, wherein the first mode is a handsfree mode.

3. Mobile phone according to claim 1 or 2, wherein the first loudspeaker (5) is located in the housing (40), close to a mouth piece (35) in the housing (40).

4. Mobile phone according to claim 1 or 2, wherein the first loudspeaker (5) is located at the back side of the mobile phone (50).

5. Mobile phone (50) comprising a housing (40) having at least two loudspeakers (5, 15) for outputting sound signals, the mobile phone (50) being switchable between at least a first mode and a second mode, wherein the first loudspeaker (5) is operable to output sound signals in the first mode and the second loudspeaker (15) is operable to output sound signals in the second mode, wherein the first loudspeaker is operable as a microphone in the first mode, wherein the first mode is a handsfree mode, and wherein the first loudspeaker (5) is located in the housing (40), close to an mouthpiece (35) formed in the housing (40).

6. Mobile phone according to any one of the claims 1-5, wherein the first and second loudspeakers (5, 15) are arranged for outputting different levels of sound, the first loudspeaker (5) being the louder speaker of the first and second loudspeaker (5, 15).

7. Mobile phone according to claim 6, wherein the electric power of the first loudspeaker (5) is more than 0.1 W, and wherein the electric power of the second loudspeaker (15) is less than 0.1 W.

8. Mobile phone according to any of claims 1-4, 6 or 7, wherein the first loudspeaker (5) is operable as a microphone in the second mode.

9. Mobile phone according to claim 8, wherein the first and second loudspeakers (5, 15) are connected to a sound input unit (25) and a sound output unit (24, 26) through switches (21, 22) controlled by a processor (7) arranged to switch modes, wherein the switches (21, 22) are exclusive switches.

10. Mobile phone according to any of the preceding claims, wherein the first loudspeaker (5) is arranged for sounding a ring tone.

11. Mobile phone according to any of the preceding claims, wherein said mobile phone further comprises a microphone (6), and wherein the microphone (6) and the second loudspeaker (15) are arranged for recording sounds in stereo in the first mode.

12. Method of switching a mobile phone between at least a first mode and a second mode, the mobile phone (50) comprising a housing (40) having at least two loudspeakers (5, 15) for outputting sound signals, said second loudspeaker (15) being located in the housing (40), close to an earpiece (45) formed in the housing (40), wherein the method comprises operating said first loudspeaker (5) to output sound signals in the first mode, operating said second loudspeaker (15) to output sound signals in the second mode, and operating the second loudspeaker (15) as a microphone in the first mode, wherein the second mode is a handheld mode.

13. Method according to claim 11, wherein the first mode is a handsfree mode and/or wherein the method comprises operating said first and second loudspeakers (5, 15) to output different levels of sound, the first loudspeaker (5) being the louder speaker of the first and second loudspeaker (5, 15).

14. Method according to claim 12 or 13, wherein the method comprises operating said first loudspeaker (5) as a microphone in the second mode.

15. Use of a loudspeaker (15) in a mobile phone (50), wherein the loudspeaker (15) is operable as a microphone in a first mode of the mobile phone and wherein the loudspeaker (15) is operable as a sound outputting device in a second mode of the mobile phone, the second mode being a handheld mode, and the loudspeaker (15) being located in the housing (40), close to an earpiece (45) formed in the housing (40).
